# EUROPEAN PATENT SPECIFICATION

(11) **EP 3 051 671 B1**
(45) Date of publication and mention of the grant of the patent: **14.11.2018**
(21) Application number: 14849908.0
(22) Date of filing: 16.09.2014
(51) Int. Cl.: H02K 3/52, H02K 15/00, H02K 5/22

(54) **BUS BAR UNIT, METHOD FOR MANUFACTURING BUS BAR UNIT, AND BRUSHLESS MOTOR**
BUSSCHIENENEINHEIT, VERFAHREN ZUR HERSTELLUNG EINER BUSSCHIENENEINHEIT UND BÜRSTENLOSER MOTOR
UNITÉ DE BARRE-BUS, PROCÉDÉ DE FABRICATION D'UNE UNITÉ DE BARRE-BUS ET MOTEUR SANS BALAIS

(30) Priority: 26.09.2013 JP 2013200139
(43) Date of publication of application: 03.08.2016
(73) Proprietor: Mitsuba Corporation, Kiryu-shi Gunma 376-8555 (JP)
(72) Inventor: YAMADA Yuichi, Kiryu-shi Gunma 376-8555 (JP); SHIMBO Yutaka, Kiryu-shi Gunma 376-8555 (JP); NARA Koji, Kiryu-shi Gunma 376-8555 (JP); NISHIMURA Yoshihiro, Kiryu-shi Gunma 376-8555 (JP); TAKEARA Toshihiro, Kiryu-shi Gunma 376-8555 (JP); OKAMOTO Atsushi, Kiryu-shi Gunma 376-8555 (JP); OZAWA Yuta, Kiryu-shi Gunma 376-8555 (JP); KATSUTA Atsushi, Kiryu-shi Gunma 376-8555 (JP); NISHIGORI Satoshi, Kiryu-shi Gunma 376-8555 (JP)
(74) Representative: Cabinet Laurent & Charras
(86) International application number: PCT/JP2014/074390
(87) International publication number: WO 2015/045949

(56) References cited:
- DE-A1- 10 116 831
- JP-A- 2003 134 757
- JP-A- 2003 284 279
- JP-A- 2006 246 594
- JP-A- 2008 312 277
- JP-A- 2010 110 160
- JP-A- 2013 046 498
- US-A1- 2004 066 103

## Description

### Technical Field

The present invention relates to a bus bar unit, a method for manufacturing a bus bar unit, and a brushless motor.

### Background Art

In general, an inner rotor type brushless motor includes a stator which is internally fitted so as to be fixed to the motor case, and a rotor which is disposed at the center in a radial direction of the motor case and is rotatably supported with respect to the stator. Plural permanent magnets are disposed on the outer circumferential surface of the rotor. The stator includes an approximately cylindrical stator core, and plural teeth which protrude to the inside in the radial direction from the stator core.

An insulator which is formed of a resin material having an insulation property is mounted on each tooth, and a coil is wound around the teeth with the insulator interposed. In addition, when power is supplied from an external power source to the coil, an attractive force or a repulsive force is generated between magnetic fluxes generated by the coil and the permanent magnets, and the rotor is rotated by the attractive force or the repulsive force.

As means for supplying power to the coil of the brushless motor, a bus bar unit may be used, such as the one disclosed in US2004/0066103A1 or DE 10116831A1. In the bus bar unit, plural metal bus bars are embedded to a resin-molded body, which is formed in an approximately annular ring-shape, in a state where the plural bus bars are insulated from each other. For example, when the coils are connected according to a star-connection method, plural phase bus bars for supplying power to the coil of each phase and a neutral point bus bar forming a neutral point (common) are embedded to the resin-molded body.

For example, Patent Literature 1 discloses a bus bar unit in which a resin-molded body is formed in an annular shape such that a rotary shaft of the rotor can be inserted into the resin-molded body, a phase bus bar embedded to the resin-molded body is formed in an arch shape, and a neutral point bus bar is formed in an annular shape.

However, in the bus bar unit disclosed in Patent Literature 1, the phase bus bar is formed by punching a metal plate in a C shape in plan view using press processing or the like, and the neutral point bus bar is formed by punching the metal plate in an approximately annular ring shape using press processing or the like. In this case, many portions of the metal plate material are not used (end material), yield deteriorates, and there is a problem in that the manufacturing cost of the bus bar unit increases.

In order to solve the above-described problem, for example, Patent Literature 2 discloses a bus bar unit which includes a bus bar holder in which plural phase bus bars and a neutral point bus bar are disposed so as to be laminated in a radial direction. In the bus bar unit, the plural phase bus bars and the neutral point bus bar are formed by a plate-shaped member which is long in a circumferential direction, and are formed such that the width direction coincides with an axial direction of the bus bar holder. In addition, each phase bus bar and the neutral point bus bar are inserted into plural annular grooves which are concentrically provided so as to be opened toward one side in the axial direction of the bus bar holder.

According to Patent Literature 2, since the bus bar can be formed by punching the elongated plate-shaped member from the metal plate material, and thereafter, by bending the elongated plate-shaped member in a ring shape, unlike the related art, it is not necessary to punch the annular ring-shaped member from the plate-shaped member. Accordingly, it is possible to increase yield, and it is possible to decrease the manufacturing cost.

### Citation List

### Patent Literature

[Patent Literature 1] Japanese Patent Application Publication No. 2009-290921
[Patent Literature 2] Japanese Patent Application Publication No. 2013-102596

### Summary of Invention

### Technical Problem

However, in the technology disclosed in Patent Literature 2, it is necessary to dispose the plural phase bus bars and the neutral point bus bar so as to maintain a predetermined insulation distance therebetween. However, it is difficult to maintain the bus bar, which is bent in a ring shape, in a predetermined shape due to springback or the like, it is difficult to mold the bus bar in a resin mold, and since the bus bars are disposed so as to be laminated at a predetermined interval in the radial direction, there is a limit on a decrease in size of the bus bar unit in the radial direction. In addition, since the width direction of the plate-shaped member and the axial direction of the bus bar holder coincide with each other, there is a limit on a decrease in size of the bus bar unit in the axial direction due to the width of the plate-shaped member. Accordingly, in the related art, there is a room to decrease manufacturing cost and size of the bus bar unit.

The present invention is made in consideration of the above-described circumstances, and an object thereof is to provide a bus bar unit capable of decreasing the size while decreasing the manufacturing cost thereof, a method for manufacturing the bus bar unit, and a brushless motor including the bus bar unit.

### Solution to Problem

According to a first aspect of the present invention, a bus bar unit is a ring-shaped bus bar unit for supplying power to coils of a plurality of phases. The bus bar unit includes: a plurality of phase bus bars which are provided for each phase and each of which includes a terminal connected to one end of the coil; and a neutral point bus bar which includes a terminal connected to the other end of the coil, in which the phase bus bars and the neutral point bus bar are disposed so as to be laminated along an axial direction of the bus bar unit in a state where a predetermined insulation distance is maintained from each other, at least one bus bar out of the phase bus bars and the neutral point bus bar is formed by bending an elongated plate-shaped member such that a width direction of the elongated plate-shaped member and a radial direction of the bus bar unit coincide with each other, and includes a plurality of bus bar pieces in which the terminals are formed and a connection portion which connects the bus bar pieces adjacent to each other, and a width of at least a portion of the connection portion is narrower than a width of the bus bar piece.

According to the configuration, since at least one out of the phase bus bars and the neutral point bus bar is formed by bending the elongated plate-shaped member such that the width direction of the elongated plate-shaped member and the radial direction of the bus bar unit coincide with each other, it is possible to form the bus bar by punching the elongated plate-shaped member from a metal plate material or the like, for example. Accordingly, unlike the related art, it is not necessary to form the bus bar by punching an annular member or a C-shaped member from a metal plate material, therefore it is possible to improve yield and decrease the manufacturing cost. Moreover, since a connection portion which connects the plural bus bar pieces adjacent to each other are provided, and the width of at least a portion of the connection portion is narrower than the width of the bus bar piece, it is possible to form the bus bar by easily bending the elongated plate-shaped member.

In addition, since the phase bus bars and the neutral point bus bar are disposed so as to be laminated along the axial direction of the bus bar unit which coincides with a thickness direction of the plate-shaped member, compared to the bus bar unit of the related art in which the phase bus bars and the neutral point bus bar are disposed such that the width direction of the plate-shaped member and the axial direction of the bus bar unit coincide with each other, it is possible to decrease the size (decrease the thickness) of the bus bar unit in the axial direction. In addition, compared to the bus bar unit of the related art in which the plural phase bus bars and the neutral point bus bar are disposed so as to be laminated in the radial direction, it is possible to suppress an increase in size in the radial direction of the bus bar unit.

In this way, according to the bus bar unit of the above-described aspect, it is possible to decrease the size of the bus bar unit while decreasing the manufacturing cost.

According to a second aspect of the present invention, in the bus bar unit of the first aspect of the present invention, the at least one bus bar of the bus bars is the neutral point bus bar.

The configuration can be used in the neutral point bus bar which is formed in an annular shape by punching a metal plate or the like in the related art. In addition, it is possible to improve yield of the neutral point bus bar and decrease the manufacturing cost.

According to a third aspect of the present invention, in the bus bar unit of the first or second aspect of the present invention, the connection portion includes a non-deformation portion in which deformation is suppressed when the plate-shaped member is bent, and a deformation portion which is formed so as to have a narrower width than that of the non-deformation portion and is positively deformable when the plate-shaped member is bent. A pair of the deformation portions is disposed on both sides in a circumferential direction of the bus bar unit in a state where the non-deformation portion is interposed therebetween, and connects the non-deformation portion and the bus bar piece.

According to the configuration, since the pair of deformation portions is disposed on both sides in the circumferential direction of the bus bar unit in a state where the non-deformation portion is interposed therebetween, it is possible to prevent bending stress from being concentrated in only a specific location of the connection portion when the plate-shaped member is bent, and it is possible to disperse bending stress on the pair of deformation portions. Accordingly, it is possible to prevent problems occurring due to bending of the plate-shaped member, and it is possible to increase endurance of the bus bar unit.

According to a fourth aspect of the present invention, in the bus bar unit of the third aspect of the present invention, the plate-shaped member is formed such that an end surface in the circumferential direction of the bus bar piece and an end surface in the circumferential direction of the non-deformation portion come into contact with each other when the plate-shaped member is bent, and a relief portion recessed in the circumferential direction is formed in at least either one angle portion of an angle portion formed by the deformation portion and the non-deformation portion, and an angle portion formed by the deformation portion and the bus bar piece.

According to the configuration, since the end surface in the circumferential direction of the bus bar piece and the end surface in the circumferential direction of the non-deformation portion come into contact with each other when the plate-shaped member is bent, it is possible to easily position each bus bar piece when the plate-shaped member is bent. In addition, since the relief portion recessed in the circumferential direction is formed in at least either one angle portion of the angle portion formed by the deformation portion and the non-deformation portion, and the angle portion between the deformation portion and the bus bar piece, when the plate-shaped member is bent, it is possible to prevent the plate-shape member from being concentrated in the angle portions and interfering, and it is possible to prevent bending stress from being concentrated in the angle portions. Accordingly, it is possible to reliably prevent problems occurring due to the bending of the plate-shaped member.

According to a fifth aspect of the present invention, in the bus bar unit of any one of the first to fourth aspects of the present invention, the phase bus bar and the neutral point bus bar are molded by an insulating material.

According to the configuration, it is possible to secure insulation between the bus bars by the resin material entered into the portion between the phase bus bar and the neutral point bus bar. In addition, in the related art, since each bus bar is disposed so as to be inserted into the groove portion opened in the axial direction of the bus bar holder, the manufacturing step is likely to be complicated. According to the present invention, by simply molding the phase bus bars and the neutral point bus bar using the resin material, it is possible to simply hold the phase bus bars and the neutral point bus bar. Accordingly, the manufacturing step is simplified, and it is possible to decrease the manufacturing cost.

According to a sixth aspect of the present invention, in the bus bar unit of any one of the first to fourth aspects of the present invention, the bus bar unit further includes a cylindrical bus bar holder which holds the phase bus bars and the neutral point bus bar. A plurality of annular groove portions into which the plate-shaped members can be inserted are formed on the outer circumferential surface of the bus bar holder so as to be arranged in an axial direction, and the phase bus bar and the neutral point bus bar are formed by bending the plate-shaped member such that the width direction of the plate-shaped member and the radial direction of the bus bar unit coincide with each other while the plate-shaped member is inserted into the groove portion.

According to the configuration, the groove portion is formed on the outer circumferential surface of the bus bar holder, and the phase bus bar and the neutral point bus bar are formed by bending the plate-shaped member while inserting the plate-shaped member into the groove portion. Accordingly, it is possible to improve yield, and it is possible to hold each bus bar by methods other than resin molding while decreasing the manufacturing cost.

According to a seventh aspect of the present invention, a method for manufacturing the bus bar unit according to the first aspect of the present invention is provided, including: a press step of punching the elongated plate-shaped member from a metal plate; and a bending step of bending the plate-shaped member such that the width direction of the plate-shaped member and the radial direction of the bus bar unit coincide with each other.

According to the configuration, since the press step of punching the elongated plate-shaped member from the metal plate is provided, compared to the case of the related art in which an annular member or a C-shaped member is punched from a metal plate, it is possible to improve yield and decrease the manufacturing cost. In addition, since the bending step of bending the plate-shaped member such that the width direction of the plate-shaped member and the radial direction of the bus bar unit coincide with each other is provided, it is possible to bend the elongated plate-shaped member and easily form a C-shaped bus bar.

According to an eighth aspect of the present invention, a brushless motor having the bus bar unit according to any one of the first to sixth aspects of the present invention, including; a stator which includes a plurality of teeth around which the coils of the plurality of phases are wound; a rotor which is rotatably provided with respect to the stator; and a motor case, in the inner portion of which the stator is fixed. The coils of the plurality of phases are electrically connected to each other by the bus bar units disposed in the motor case.

According to the configuration, it is possible to decrease cost and form a small sized brush motor both in the axial and the radial directions.

### Advantageous Effects of Invention

According to the bus bar unit, since at least one bus bar out of a phase bus bars and a neutral point bus bar is formed by bending an elongated plate-shaped member such that a width direction of the elongated plate-shaped member and a radial direction of a bus bar unit coincide with each other, it is possible to form the bus bar by punching the elongated plate-shaped member from a metal plate material or the like, for example. Accordingly, unlike the related art, since it is not necessary to form the bus bar by punching an annular member or a C-shaped member from a metal plate material, it is possible to improve yield and decrease the manufacturing cost. Moreover, since a plurality of bus bar pieces and a connection portion which connects the bus bar pieces adjacent to each other are provided, and the width of at least a portion of the connection portion is narrower than the width of the bus bar piece, it is possible to form the bus bar by easily bending the elongated plate-shaped member.

In addition, since the phase bus bar and the neutral point bus bar are disposed so as to be laminated along the axial direction of the bus bar unit which coincides with a thickness direction of the plate-shaped member, compared to the bus bar unit of the related art in which the phase bus bar and the neutral point bus bar are disposed such that the width direction of the plate-shaped member and the axial direction of the bus bar unit coincide with each other, it is possible to decrease the size (decrease the thickness) of the bus bar unit in the axial direction. In addition, compared to the bus bar unit of the related art in which the plural phase bus bars and the neutral point bus bar are disposed so as to be laminated in the radial direction, it is possible to suppress an increase in size in the radial direction of the bus bar unit.

In this way, according to the bus bar unit described above, it is possible to decrease the size while decreasing the manufacturing cost.

### Brief Description of Drawings

FIG. 1 is a perspective sectional view showing a brushless motor in a first embodiment of the present invention.
FIG. 2 is a perspective view showing a stator core.
FIG. 3 is a perspective view showing a bus bar unit.
FIG. 4 is a perspective view showing the bus bar unit.
FIG. 5 is a perspective view showing a lamination state between phase bus bars and a neutral point bus bar.
FIG. 6 is a perspective view showing the lamination state between the phase bus bars and the neutral point bus bar.
FIG. 7 is an explanatory view of a press step among steps for manufacturing the neutral point bus bar.
FIG. 8 is an explanatory view of a bending step among the steps for manufacturing the neutral point bus bar.
FIG. 9 is an enlarged view of a connection portion in the bending step.
FIG. 10 is an explanatory view schematically showing a connection state of coils.
FIG. 11 is an explanatory view of a neutral point bus bar according to a first modification example of the first embodiment.
FIG. 12 is an explanatory view of a neutral point bus bar according to a second modification example of the first embodiment.
FIG. 13 is a perspective view showing a bus bar unit according to a second embodiment.
FIG. 14 is an explanatory view of a step for manufacturing the bus bar unit according to the second embodiment.

### Description of Embodiments

### (First Embodiment)

A first embodiment of the present invention will be described with reference to the drawings. After a brushless motor 1 according to the first embodiment is described, a bus bar unit will be described. In addition, in descriptions below, a direction along a center axis O of the brushless motor 1 is referred to as an axial direction, a direction orthogonal to the center axis O is referred to as a radial direction, and a direction circulating around the center axis O is referred to as a circumferential direction.

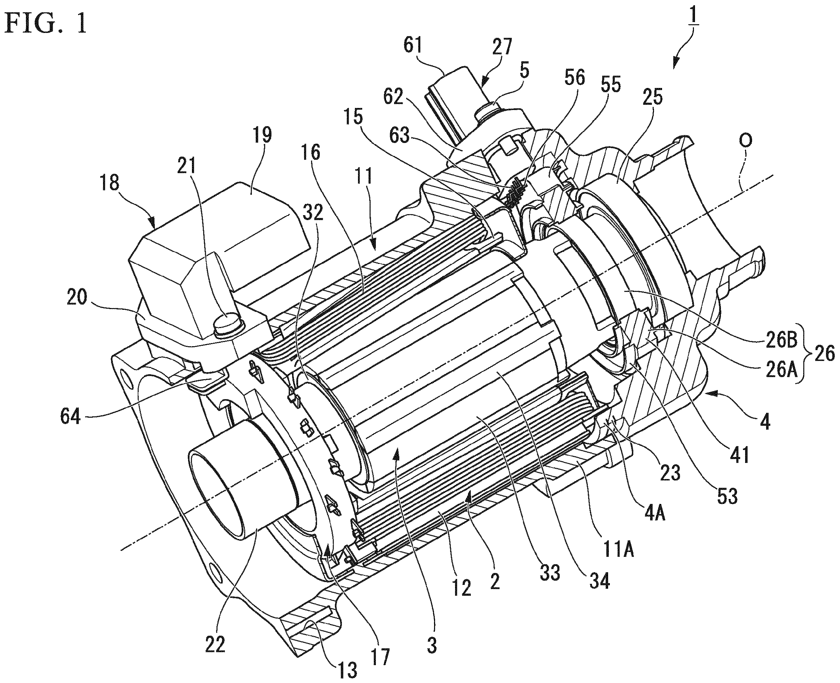

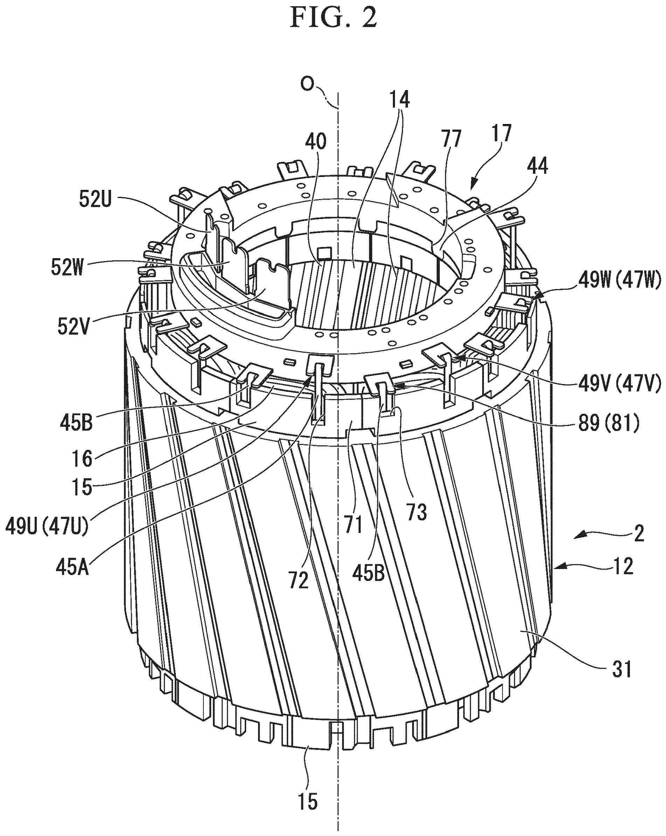

FIG. 1 is a perspective sectional view showing the brushless motor 1, and FIG. 2 is a perspective view showing a stator core 12.

As shown in FIGS. 1 and 2, for example, the brushless motor 1 is used as a drive source of an Electric Power Steering (EPS), and includes a stator 2 and a rotor 3 which is disposed inside the stator 2. The rotor 3 is rotatably supported with respect to a bracket 4 which is fixed to the stator 2.

A rack shaft (not shown) is inserted inside the rotor 3. The rack shaft forms a rack and pinion mechanism inside a gearbox, and is movable in the axial direction of the brushless motor 1 according to an operation of a steering wheel. Both ends of the rack shaft are connected to wheels of a vehicle via knuckle arms or the like.

In the stator 2, a stator core 12 is fixed to the inner circumference of a stator housing (motor case) 11, which is formed in a cylindrical shape, by fixing means such as shrinkage fitting or press fitting. In the stator housing 11, a bolt hole 13 is formed on the circumferential edge portion of each of both opened end portions, and the bracket 4, a bracket (not shown), or the like can be fixed to the stator housing 11 via the bolt hole 13. A spigot portion 11A, which is used when spigot joining is performed on the stator housing 11 and the bracket 4, is formed on the end portion of the bracket 4 side of the stator housing 11.

In the stator core 12, plural (nine in the present embodiment) teeth 14 for winding the coils 16 extend from an annular outer circumferential portion 31 toward the center in the radial direction. In the inner circumferential side of the stator core 12, dovetail-shaped slots 40 between adjacent teeth 14 are formed in plural locations (nine locations in the present embodiment). After an insulator 15 is mounted on each tooth 14, the coil 16 is wound around the tooth by a so-called concentrated winding method. Each of a winding start end 45A and a winding finish end 45B of each coil 16 is led out toward a side opposite to the bracket 4.

In the outside in the radial direction of the insulator 15, an outer circumferential wall 71 is erected along the axial direction. In the outer circumferential wall 71, a winding start end concave portion 72 is formed on a portion corresponding to a leading-out position of the winding start end 45A of each coil 16. In addition, in the outer circumferential wall 71 of the insulator 15, a winding finish end concave portion 73 is formed on a portion corresponding to a leading-out position of the winding finish end 45B.

For example, the coils 16 are allocated in order of a U-phase, a V-phase, and a W-phase along the circumferential direction. That is, the brushless motor 1 of the present embodiment is a three-phase brushless motor having the coils 16 of three phases such as the U-phase, the V-phase, and the W-phase.

The stator core 12 is skewed with respect to an axis line. That is, the teeth 14 and the slots 40 are formed so as to be twisted with respect to the center axis O. The stator core 12 may be divided in the circumferential direction and formed by joining plural core units having the teeth 14 to each other, or may not be divided in the circumferential direction and integrally formed.

The bracket 4 is formed in an approximately cylindrical shape and is fastened and fixed to the stator housing 11 by a bolt (not shown). A fitting portion 4A is provided on the end portion in the axial direction of the bracket 4. By the fitting portion 4A, the bracket 4 and the spigot portion 11A of the stator housing 11 are fitted to each other when the bracket 4 abuts to the stator housing 11. A groove (not shown) is formed on the outer circumferential surface of the fitting portion 4A, and a packing 23 such as an O-ring is mounted on the groove. An end portion opposite to the fitting portion 4A of the bracket 4 is opened such that the rack shaft can be inserted. In the bracket 4, a bearing 25 is press-fitted to the opening side.

A resolver stator 26A is fixed to the side of the bracket 4 closer to the stator 2 than the bearing 25. The resolver stator 26A configures a resolver 26 which detects a rotation position of the rotor 3. A sensor connector 27 for extracting electric signals from the resolver stator 26A is fixed to the circumferential portion of the bracket 4.

The resolver stator 26A includes a resolver stator core 41 which is configured by laminated plates formed of magnetic materials, and teeth (not shown) which extend toward the inside in the radial direction of the resolver stator core 41. The teeth are disposed at equal intervals in the circumferential direction. Over each tooth mounted with an insulator 53, a resolver coil (not shown) is wound around. The end portion of winding of each resolver coil is led to a terminal holding portion 55 which is formed by protruding a portion of the insulator 53.

In the terminal holding portion 55, a harness connection terminal 56 is integrally molded in accordance with the number of the end portions of the windings of the resolver coils. The end portions of the windings of the resolver coils are fixed to each harness connection terminal 56 one by one. The resolver stator 26A is coated with a resin material so as to cover the connection locations between the harness connection terminals 56 and the end portions of the resolver coils, and the entire resolver coil. The coating protects the connection locations between the harness connection terminals 56 and the end portions of the resolver coils, and the windings of the resolver coils.

The sensor connector 27 includes a receiving portion 61, to which a signal cable can be fitted, in the tip portion of the sensor connector, and also the base end portion of the sensor connector is inserted into the bracket 4. Moreover, a flange portion 62 which comes into close contact with the outer surface of the bracket 4 is provided on the outer circumference of the base end portion of the sensor connector 27. The sensor connector 27 is fastened and fixed to the bracket 4 by screwing a bolt 5 to the bracket 4 via the flange portion 62. In addition, connector terminals 63 penetrating the inner portion of the sensor connector 27 are integrally molded in the sensor connector 27. The end portions of the resolver stator 26A side of the connector terminals 63 are arranged in accordance with the dispositions of the harness connector terminals 56, and each end portion is connected to the harness connection terminal 56.

The rotor 3 has a hollow rotary shaft member 22 along the center axis O. One end portion of the rotary shaft member 22 is journaled by a bearing 25 which is press-fitted to the bracket 4. A resolver rotor 26B configuring the resolver 26 is fixed to the outer circumferential surface of one end portion of the rotary shaft member 22. Moreover, a rotor magnet 33 is fixed to the bracket 34 via a metal plate 32 at a position facing the stator core 12 on the outer circumferential surface of the rotary shaft member 22. For example, the rotor magnet 33 is configured of an annular permanent magnet, and plural magnetic poles are disposed in the circumferential direction.

A ball nut (not shown) is fixed to the end portion of the rotary shaft member 22. The ball nut constitutes a ball nut mechanism by interposing plural balls between the ball nut and a ball screw formed in a portion of the rack shaft. The ball nut is rotatably supported with respect to a bearing which is provided in a bracket (not shown) fixed to the stator housing 11.

Here, the winding start end 45A and the winding finish end 45B of each coil 16 are respectively connected to the bus bar unit 17. The bus bar unit 17 is disposed so as to surround the periphery of the rotary shaft member 22 on the end portion opposite to the bracket 4 in the stator housing 11. The bus bar unit 17 is connected to a power source connector 18 which protrudes to the outer circumferential portion of the stator housing 11.

A receiving portion 19 for fitting a power source cable extending from an external power source (not shown) is integrally molded in the tip portion of the power source connector 18. The power source connector 18 supplies current, which is supplied from the external power source via the power source cable, to the bus bar unit 17.

A flange portion 20 which comes into contact with the outer surface of the stator housing 11 is provided on the outer circumference of the base end portion of the power source connector 18. The power source connector 18 is fastened and fixed to the stator housing 11 by screwing a bolt 21 to the stator housing 11 via the flange portion 20.

Moreover, three power source connector terminals 64 penetrating the inner portion of the power source connector 18 are integrally molded in the power source connector 18 so as to be insulated from each other. Each of power supply portions 52U, 52V, and 52W of the bus bar unit 17 is connected to the end portion of the bus bar unit 17 side of each power source connector terminal 64.

### (Bus Bar Unit)

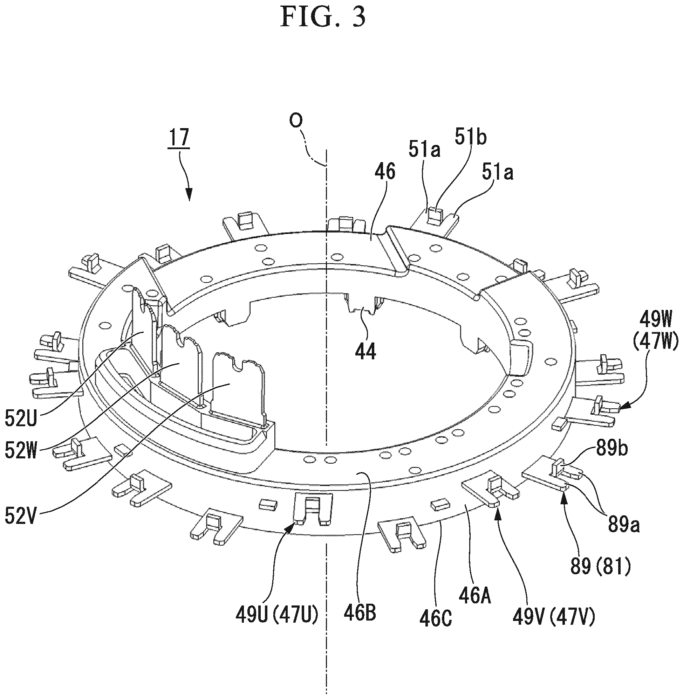

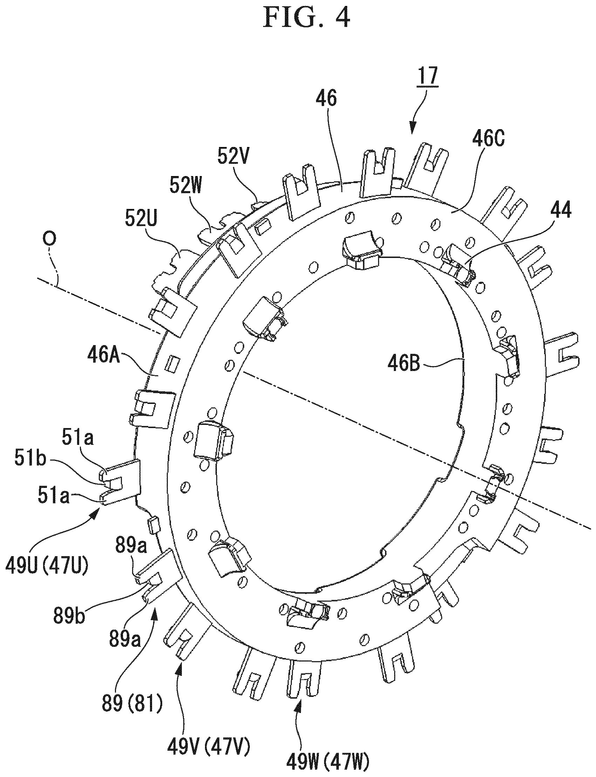

FIG. 3 is a perspective view when the bus bar unit 17 is viewed from the outside in the axial direction, and FIG. 4 is a perspective view when the bus bar unit 17 is viewed from the stator core 12 (refer to FIG. 1) side.

As shown in FIGS. 3 and 4, the coil 16 (refer to FIG. 2) of each phase is connected to the bus bar unit 17 by a star-connection method, and power is supplied to the coil 16 of each phase. The entire bus bar unit 17 is formed in a ring shape, and is coaxially disposed with the center axis O of the brushless motor 1. Accordingly, the axial direction, the radial direction, and the circumference direction of the bus bar unit 17 are coincident with the axial direction, the radial direction, and the circumferential direction of the brushless motor 1.

The bus bar unit 17 includes phase bus bars (U-phase bus bar 47U, V-phase bus bar 47V, and W-phase bus bar 47W) which are respectively provided in a U-phase, a V-phase, and a W-phase and include phase terminals electrically connected to the winding start ends 45A of the coils 16, a neutral point bus bar 81 which includes neutral point terminals 89 electrically connected to the other end of the coil 16, and a resin-molded body 46 which has an insulation property and integrally holds the U-phase bus bar 47U, the V-phase bus bar 47V, the W-phase bus bar 47W, and the neutral point bus bar 81. Each component of the bus bar unit 17 will be described in detail below.

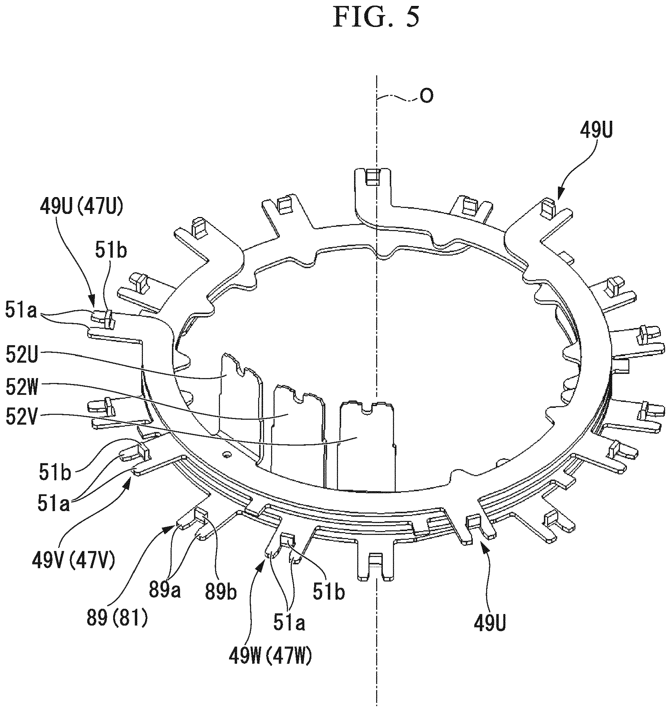

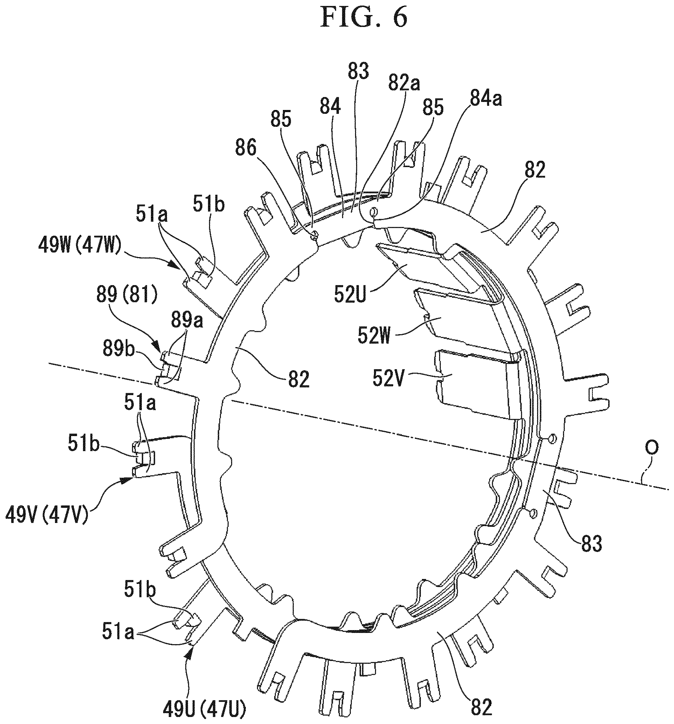

FIGS. 5 and 6 are perspective views showing a lamination state between phase bus bars (U-phase bus bar 47U, V-phase bus bar 47V, and W-phase bus bar 47W) and the neutral point bus bar 81. FIG. 5 is a perspective view when viewed in the outside in the axial direction, and FIG. 6 is a perspective view when viewed from the stator core 12 (refer to FIG. 1). In addition, in FIGS. 5 and 6, the resin-molded body 46 (refer to FIGS. 3 and 4) is not shown. Moreover, the basic configurations of the U-phase bus bar 47U, the V-phase bus bar 47V, and the W-phase bus bar 47W are approximately identical except that the positions of power supply portions 52U, 52V, and 52W are different. Accordingly, the U-phase bus bar 47U will be mainly described below, and detailed descriptions of the V-phase bus bar 47V and the W-phase bus bar 47W are omitted.

As shown in FIGS. 5 and 6, for example, the U-phase bus bar 47U is formed by punching a plate member formed of a metal material such as copper by press processing or the like. The U-phase bus bar 47U is formed in a C shape having a predetermined curvature radius about the center axis O of the brushless motor 1.

In the U-phase bus bar 47U, plural (three in the present embodiment) U-phase terminals 49U protrude toward the outside in the radial direction at positions corresponding to the winding start ends 45A of the coil 16 having the U-phase. The U-phase terminals 49U protrude toward the outside in the radial direction from the resin-molded body 46 described below (refer to FIG. 3).

A pair of tongue portions 51a and 51a, which is formed in a fork shape, is integrally molded in the tip of each U-phase terminal 49U. The pair of tongue portions 51a and 51a can hold the winding start end 45A of the coil 16.

Moreover, a joining portion 51b is provided between the pair of tongue portions 51a and 51a. The joining portion 51b is erected at a portion between the pair of tongue portions 51a and 51a so as to be directed to the outside (upper side in FIG. 5) along the axial direction. For example, the winding start end 45A of the coil 16 held by the pair of tongue portions 51a and 51a is electrically connected to the joining portion 51b by fixing means such as welding.

In the U-phase bus bar 47U, the power supply portion 52U is erected so as to be directed to the outside (upper side in the FIG. 5) along the axial direction. The power supply portion 52U is mechanically and electrically connected to the power source connector terminal 64 (refer to FIG. 1) penetrating the power source connector 18 by fixing means such as welding, for example. Accordingly, the external power source can supply power to the coil 16 via the power source connector terminal 64 and the bus bar unit 17.

Similarly to the U-phase bus bar 47U, the V-phase bus bar 47V and the W-phase bus bar 47W are respectively formed in a C shape, and respectively include a V-phase terminal 49V and a W-phase terminal 49W, and power supply portions 52V and 52W.

Similarly to the U-phase terminal 49U, each of the V-phase terminal 49V and the W-phase terminal 49W includes the pair of tongue portions 51a and 51a, and the joining portion 51b which is provided between the pair of the tongue portions 51a and 51a.

When the U-phase bus bar 47U, the V-phase bus bar 47V, and the W-phase bus bar 47W are laminated along the axial direction, the power supply portions 52U, 52V, and 52W of respective phases are deviated in the circumferential direction so as not to interfere with each other at a predetermined distance, and are formed at the positions corresponding to the power source connector terminals 64 of the power source connector 18. In addition, when the U-phase bus bar 47U, the V-phase bus bar 47V, and the W-phase bus bar 47W are laminated along the axial direction, the U-phase terminal 49U, the V-phase terminal 49V, and the W-phase terminal 49W protrude in this order along the circumferential direction.

### (Neutral Point Bus Bar)

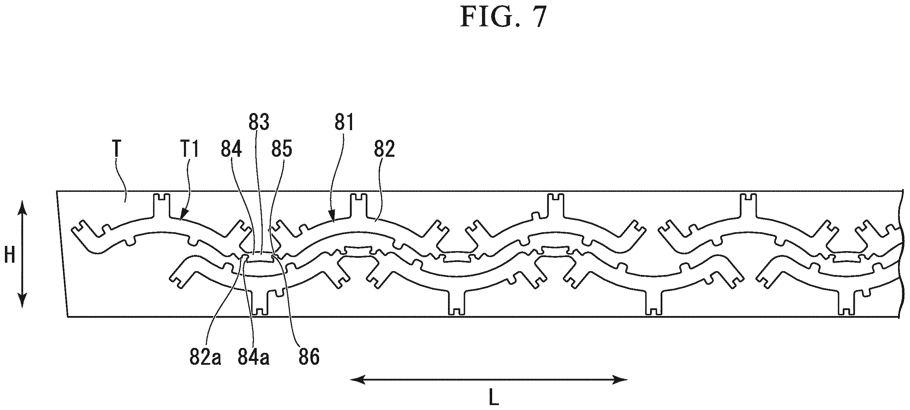

FIG. 7 is an explanatory view of a press step among steps for manufacturing the neutral point bus bar 81.

The neutral point bus bar 81 is formed in a C shape having a predetermined curvature radius about the center axis O of the brushless motor 1 (refer to FIG. 1). Although the details are described below, as shown in FIG. 7, after a elongated plate-shaped member T1 is punched from a metal plate T, the neutral point bus bar 81 is formed by bending the plate-shaped member T1 such that a width direction H of the plate-shaped member T1 and the radial direction of the bus bar unit 17 (refer to FIG. 3) coincide with each other.

As shown in FIG. 6, the neutral point bus bar 81 includes three bus bar pieces 82, and two connection portions 83 which connect the adjacent bus bar pieces 82 to each other. The three bus bar pieces 82 have approximately the identical shapes and lengths.

In each bus bar piece 82, plural (three in the present embodiment, and total nine in the neutral point bus bar 81) neutral point terminals 89 protrude toward the outside in the radial direction. The neutral point terminals 89 are disposed at approximately equal intervals in the circumferential direction of the neutral point bus bar 81. In addition, the other ends of the coils 16 having the U-phase, the V-phase, and the W-phase are respectively connected to three neutral point terminals 89 of each bus bar piece 82 one by one. Accordingly, since the other ends of the coils 16 having the U-phase, the V-phase, and the W-phase have electrically the same potential by one bus bar piece 82, it is not necessary to electrically connect the portion between the adjacent bus bar pieces 82. However, as described below, even when narrow deformation portions 85 exist in the connection portion 83 between the adjacent bus bar pieces 82 connected to each other in order to improve bending workability or the like of the plate-shaped member T1, electric problems do not occur.

Similarly to the U-phase terminal 49U, each of the neutral point terminals 89 includes a pair of tongue portions 89a and 89a, and a joining portion 89b which is provided between the pair of tongue portions 89a and 89a. The pair of tongue portions 89a and 89a can hold the winding finish end 45B of the coil 16. In addition, the winding finish end 45B of the coil 16 held by the pair of tongue portions 89a and 89a is electrically connected to the joining portion 89b by fixing means such as welding, for example.

The connection portion 83 is provided between the bus bar pieces 82. The connection portion 83 includes a non-deformation portion 84, and the deformation portions 85 which are provided on both ends in the circumferential direction of the non-deformation portion 84.

The non-deformation portion 84 is formed so as to have the identical width (width in the radial direction) to that of the bus bar piece 82 in the circumferential direction. In the non-deformation portion 84, when the plate-shaped member T1 (refer to FIG. 7) is bent, deformation is suppressed.

The deformation portion 85 is formed to be narrower in the width than the non-deformation portion 84, and when the plate-shaped member T1 (refer to FIG. 7) is bent, the deformation portion 85 is positively deformed. The deformation portion 85 connects the bus bar piece 82 and the non-deformation portion 84 in the outside in the radial direction of the neutral point bus bar 81.

The neutral point bus bar 81 is formed so as to be bent in a C shape such that an end surface 82a in the circumferential direction of the adjacent bus bar pieces 82 and an end surface 84a in the circumferential direction of the non-deformation portion 84 come into contact with each other. Accordingly, each bus bar piece 82 is positioned by the end surface 84a of the non-deformation portion 84, and the movement of the bus bar piece 82 toward the inside in the radial direction is restricted.

Here, an angle portion (a corner portion) formed by the deformation portion 85 and the non-deformation portion 84 and an angle portion formed by the deformation portion 85 and the bus bar piece 82 are notched in an arc shape, and relief portions 86 which are recessed in the circumferential direction are formed. When the plate-shaped member T1 (refer to FIG. 7) is bent, the relief portion 86 prevents the plate-shape member T1 from being concentrated in and interfering with the angle portion formed by the deformation portion 85 and the non-deformation portion 84, and the angle portion formed by the deformation portion 85 and the bus bar piece 82, which prevents bending stress from being concentrated in the angle portions.

### (Step for Manufacturing Neutral Point Bus Bar)

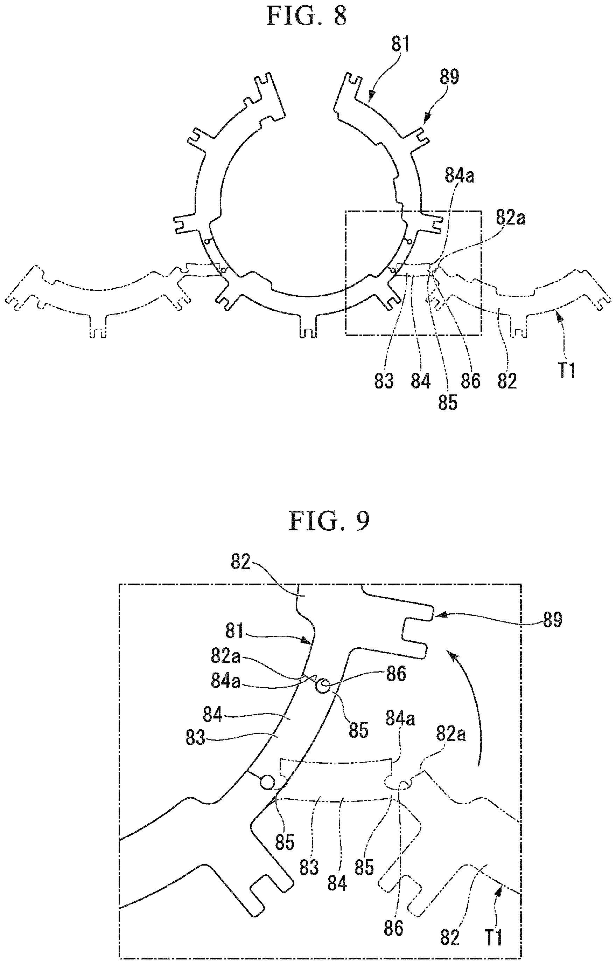

FIG. 8 is an explanatory view of a bending step among the steps for manufacturing the neutral point bus bar, and FIG. 9 is an enlarged view of the connection portion 83 in the bending step. In addition, in FIGS. 8 and 9, the bus bar pieces 82 before the bending step is performed are shown by two-dot chain lines.

The step for manufacturing the neutral point bus bar 81 will now be described.

The step for manufacturing the neutral point bus bar 81 includes the press step shown in FIG. 7, and the bending step shown in FIG. 8.

First, in the step for manufacturing the neutral point bus bar 81, as shown in FIG. 7, the press step is performed in which the elongated plate-shaped member T1 is punched from the metal plate T. In the press step, the plate-shaped member T1, in which the bus bar pieces 82 and the connection portions 83 of the neutral point bus bar 81 are spread, is punched along a longitudinal direction L of the metal plate T. In the present embodiment, plural plate-shaped members T1 are punched from the metal plate T such that end material is minimized.

A blanking layout when the plate-shaped members T1 are punched from the metal plate T is not particularly limited. In the present embodiment, for example, a punching position of a first plate-shaped member T1 is set along an edge portion of one side in the width direction H (the upper side in FIG. 7) of the metal plate T such that the inside in the radial direction of the neutral point bus bar 81 is on the other side in the width direction H (the lower side in FIG. 7) of the metal plate T. In addition, a punching position of a second plate-shaped member T1 is set along an edge portion of the other side in the width direction H (the lower side in FIG. 7) of the metal plate T such that the inside in the radial direction of the neutral point bus bar 81 is on one side in the width direction H (the upper side in FIG. 7) of the metal plate. In this case, the punching position of the first plate-shaped member T1 and the second plate-shaped member T1 are set in zigzag such that the bus bar pieces 82 and the connection portions 83 of the first plate-shaped member T1 and the second plate-shaped member T1 respectively face each other. Similarly, the punching positions of plural plate-shaped members T1 are set. For example, the punching of the plate-shaped member T1 is performed by progressive pressing. In addition, in the press step, besides the plate-shaped member T1 is punched from the metal plate T, the joining portion 89b of the neutral point terminal 89 may be bent simultaneously along the axial direction.

In the step for manufacturing the neutral point bus bar 81, as shown in FIG. 8, the bending step is performed in which the plate-shaped member T1 punched from the metal plate T (refer to FIG. 7) in the press step is bent. In the bending step, the bending of the plate-shaped member T1 is performed such that the width direction of the plate-shaped member T1 and the radial direction (that is, the radial direction of the bus bar unit 17 (refer to FIG. 3)) of the neutral point bus bar 81 coincide with each other.

Here, as shown in FIG. 9, in the bending step, bending is performed by moving the bus bar pieces 82 towards the inside in the radial direction such that the end surfaces 82a in the circumferential direction of the adjacent bus bar pieces 82 and the end surfaces 84a in the circumferential direction in the non-deformation portions 84 of the connection portions 83 come into contact with each other. Accordingly, since each bus bar piece 82 is positioned by the end surface 84a of the non-deformation portion 84 and the movement in the inside in the radial direction of the bus bar piece is restricted, a worker can simply form the C-shaped neutral point bus bar 81 having a predetermined curvature radius.

In addition, since the plate-shaped member T1 is to be plastically deformed by springback after the processing, in order to form the neutral point bus bar 81 having a predetermined curvature radius, the plate-shaped member T1 is processed so as to have a slightly smaller curvature radius than a desired curvature radius assuming the springback when the plate-shaped member T1 is bent. According to this processing, the neutral point bus bar 81 having a predetermined curvature radius can be formed.

At the time when the bending step ends, the step for manufacturing the neutral point bus bar 81 ends.

In this way, since the elongated plate-shaped member T1 is punched from the metal plate T and the neutral point bus bar 81 can be formed, unlike the related art, it is not necessary to punch an annular or C-shaped member from a metal plate to form a bus bar. Accordingly, compared to the related art, since waste portions (end material) of the metal plate T decrease, it is possible to improve yield, and it is possible to decrease the manufacturing cost of the neutral point bus bar 81. Moreover, since the width of the deformation portion 85 in the connection portion 83 is narrower than the width of the bus bar piece 82, it is possible to form the neutral point bus bar 81 by easily bending the elongated plate-shaped member T1.

As shown in FIG. 3, the above-described U-phase bus bar 47U, V-phase bus bar 47V, W-phase bus bar 47W, and neutral point bus bar 81 are molded by the resin-molded body 46 in the laminated state in this order from the outside in the axial direction toward the inside (from the upper side to the lower side in FIG. 3) at predetermined intervals so as to maintain a constant insulation distance. A resin material forming the resin-molded body 46 enters between the U-phase bus bar 47U, the V-phase bus bar 47V, the W-phase bus bar 47W, and neutral point bus bar 81. Accordingly, the U-phase bus bar 47U, the V-phase bus bar 47V, the W-phase bus bar 47W, and the neutral point bus bar 81 are molded by the resin-molded body 46 in a state where the bars are electrically insulated from each other.

The U-phase terminal 49U, the V-phase terminal 49V, the W-phase terminal 49W, and the neutral point terminal 89 protrude from the outer circumferential surface 46A of the resin-molded body 46 along the circumferential direction.

Moreover, the power supply portions 52U, 52V, and 52W protrude from one end surface 46B on the outside (the upper side in FIG. 3) in the axial direction in the resin-molded body 46 so as to be aligned along the circumferential direction.

Moreover, as shown in FIG. 4, plural (nine in the present embodiment) protrusions 44 protrude toward the inside in the axial direction on the other end surface 46C in the inside (closer side on the paper surface in FIG. 3) in the axial direction of the resin-molded body 46. The protrusions 44 are disposed at equal intervals in the circumferential direction. As shown in FIG. 2, the protrusions 44 are fitted to concave portions 77 which are formed on the end portion in the axial direction of the insulator 15. Accordingly, in a state where the bus bar unit 17 is positioned in the circumferential direction with respect to the stator 2, the bus bar unit 17 is disposed in the end portion on the outside (the upper side in FIG. 2) in the axial direction of the stator 2.

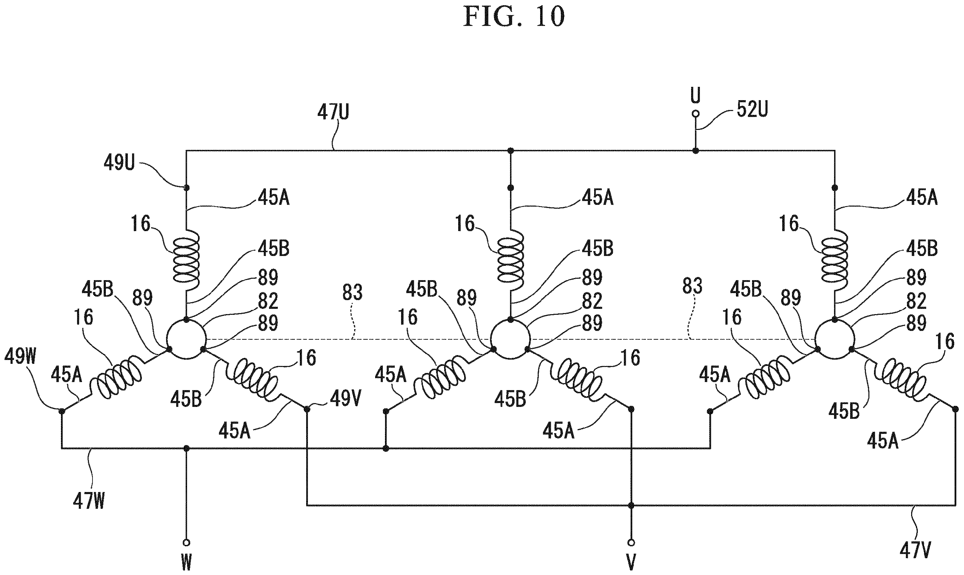

FIG. 10 is an explanatory view schematically showing a connection state of the coils 16.

In the bus bar unit 17 configured as described above, the winding start end 45A of the coil 16 having each phase is electrically connected to each of the phase terminals 49U, 49V, and 49W of the U-phase bus bar 47U, the V-phase bus bar 47V, and the W-phase bus bar 47W, and the winding finish end 45B of the coil 16 having each phase is electrically connected to the neutral point terminal 89 of the neutral point bus bar 81. Accordingly, the coils 16 having respective phases are connected according to a star-connection method. In addition, other coils 16 having respective phases, those are connected to the coils 16 having respective phases in parallel, are similarly connected, and the portions between the bus bar pieces 82 are electrically connected by the connection portion 83.

According to the present embodiment, since the neutral point bus bar 81 is formed by bending an elongated plate-shaped member T1 such that the width direction H of the elongated plate-shaped member T1 and the radial direction of the bus bar unit 17 coincide with each other, it is possible to form the neutral point bus bar 81 by punching the elongated plate-shaped member T1 from the metal plate T. Accordingly, unlike the related art, since it is not necessary to form the bus bar by punching an annular member or a C-shaped member from a metal plate, it is possible to improve yield and decrease the manufacturing cost. Moreover, since three bus bar pieces 82 and connection portions 83 which connect the bus bar pieces 82 and 82 adjacent to each other are provided, and the width of the deformation portion 85 forming the connection portion 83 is narrower than the width of the bus bar piece 82, it is possible to easily bend the elongated plate-shaped member T1 so as to form the neutral point bus bar 81.

In addition, since the U-phase terminal 49U, the V-phase terminal 49V, the W-phase terminal 49W, and the neutral point bus bar 81 are disposed so as to be laminated along the axial direction of the bus bar unit 17 which coincides with the thickness direction, compared to the bus bar unit of the related art in which the phase bus bar and the neutral point bus bar are disposed such that the width direction of the plate-shaped member and the axial direction of the bus bar unit coincide with each other, it is possible to decrease the size (decrease the thickness) of the bus bar unit in the axial direction. In addition, compared to the bus bar unit of the related art in which the plural phase bus bars and the neutral point bus bar are disposed so as to be laminated in the radial direction, it is possible to suppress an increase in size in the radial direction of the bus bar unit 17.

In this way, according to the bus bar unit 17 of the present embodiment, it is possible to decrease the manufacturing cost and the size of the bus bar unit 17.

Moreover, since the pair of the deformation portions 85 is disposed on both sides in the circumferential direction of the bus bar unit 17 in a state where the non-deformation portion 84 is interposed therebetween, it is possible to prevent bending stress from being concentrated in only a specific location of the connection portion 83 when the plate-shaped member T1 is bent, and it is possible to disperse bending stress on the pair of deformation portions 85. Accordingly, it is possible to prevent problems occurring due to the bending of the plate-shaped member T1, and it is possible to increase endurance of the bus bar unit 17.

In addition, the end surface 82a in the circumferential direction of the bus bar piece 82 and the end surface 84a in the circumferential direction of the non-deformation portion 84 come into contact with each other when the plate-shaped member T1 is bent. Therefore, it is possible to easily position each bus bar piece 82 when the plate-shaped member T1 is bent. Moreover, the relief portions 86 recessed in the circumferential direction are formed in the angle portion formed by the deformation portion 85 and the non-deformation portion 84, and the angle portions formed by the deformation portion 85 and the bus bar piece 82. Therefore, when the plate-shaped member T1 is bent, it is possible to prevent the plate-shape member T1 from being concentrated in the angle portions and interfering with the angle portions. Also, and it is possible to prevent bending stress from being concentrated in the angle portions. Accordingly, it is possible to reliably prevent problems occurring due to the bending of the plate-shaped member T1.

Moreover, since the U-phase bus bar 47U, the V-phase bus bar 47V, the W-phase bus bar 47W, and the neutral point bus bar 81 are molded by a resin material, it is possible to secure insulation between bus bars due to the resin material entering between the U-phase bus bar 47U, the V-phase bus bar 47V, the W-phase bus bar 47W, and the neutral point bus bar 81. In addition, in the related art, since each bus bar is disposed so as to be inserted into the groove portion opened in the axial direction of the bus bar holder, the manufacturing step is likely to be complicated. According to the present embodiment, by simply molding the U-phase bus bar 47U, the V-phase bus bar 47V, the W-phase bus bar 47W, and the neutral point bus bar 81 using the resin material, it is possible to simply hold the U-phase bus bar 47U, the V-phase bus bar 47V, the W-phase bus bar 47W, and the neutral point bus bar 81. Accordingly, the manufacturing step is simplified, and it is possible to decrease the manufacturing cost.

In addition, according to the step for manufacturing the bus bar unit 17 of the present embodiment, since the press step of punching the elongated plate-shaped member T1 from the metal plate T is provided, compared to the case of the related art in which an annular member or a C-shaped member is punched from a metal plate, it is possible to improve yield and decrease the manufacturing cost. Moreover, in the step for manufacturing the bus bar unit 17 of the present embodiment, since the bending step of bending the plate-shaped member T1 such that the width direction H of the plate-shaped member T1 and the radial direction of the bus bar unit 17 coincide with each other is provided, it is possible to bend the elongated plate-shaped member T1 and to easily form a C-shaped bus bar.

In addition, according to the present embodiment, it is possible to decrease cost and form the small-sized brushless motor 1 in the axial direction and the radial direction.

### (Each Modification Example of First Embodiment)

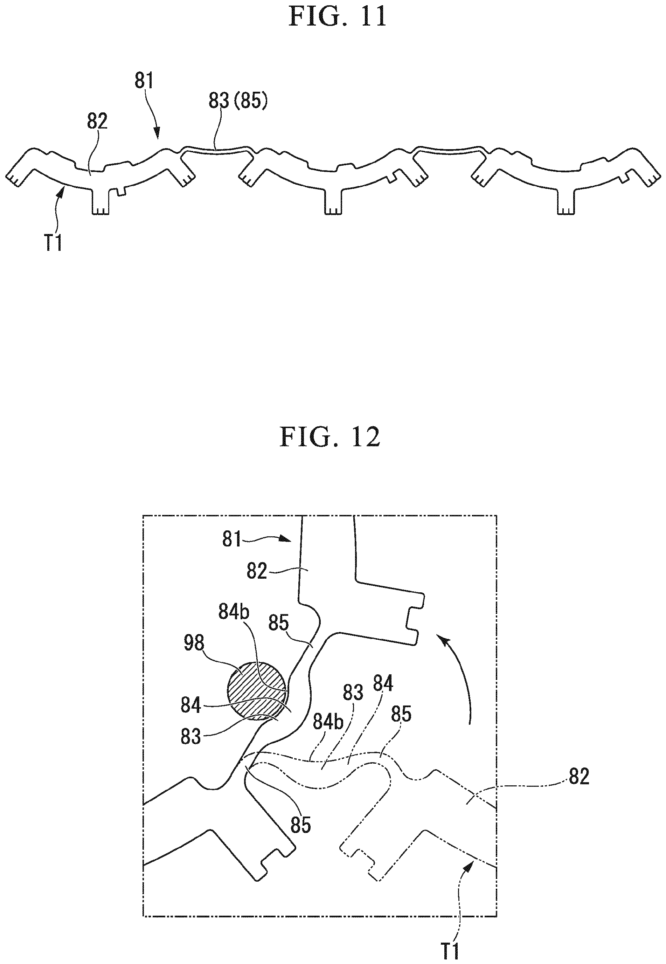

FIG. 11 is an explanatory view of a neutral point bus bar 81 according to a first modification example of the first embodiment.

FIG. 12 is an explanatory view of a neutral point bus bar 81 according to a second modification example of the first embodiment.

Modifications of the first embodiment will now be described.

In the first embodiment, the neutral point bus bar 81 includes the connection portions 83 which connect the adjacent bus bar pieces 82 to each other, and each connection portion 83 includes the non-deformation portion 84, and the deformation portions 85 which are provided on both ends in the circumferential direction of the non-deformation portion 84 (refer to FIG.6).

The connection portion 83 is not limited to the shape of the first embodiment, and may be the connection portions 83 according to the following modification examples. In addition, descriptions below with respect to configurations similar to those of the first embodiment are omitted.

As shown in FIG. 11, in the neutral point bus bar 81 according to the first modification example of the first embodiment, the widths (the widths in the radial direction) of the connection portion 83 are equal between the bus bar pieces 82, and are narrower than the width of the bus bar piece 82. That is, the entire connection portion 83 constitutes the deformation portion 85. In addition, in the bending step, for example, preferably, the bending is performed by a jig or the like such that the entire connection portion 83 has a predetermined curvature radius. In this way, even when the entire connection portion 83 constitutes the deformation portion 85, it is possible to easily bend the elongated plate-shaped member T1 to form the neutral point bus bar 81. And, it is possible to decrease the size of the bus bar unit 17 while decreasing the manufacturing cost. Particularly, since the entire connection portion 83 can be bent, it is possible to reliably prevent bending stress from being concentrated in a specific location of the connection portion 83.

As shown in FIG. 12, in the neutral point bus bar 81 according to the second modification example of the first embodiment, the connection portion 83 includes the non-deformation portion 84, and the deformation portions 85 which are provided on both ends in the circumferential direction of the non-deformation portion 84, and an arc-shaped portion 84b recessed to the outside in the radial direction is formed on the inner surface in the radial direction of the non-deformation portion 84.

In the bending step, the bending is performed while positioning the non-deformation portion 84 using a positioning pin 98 with which the arc-shaped portion 84b can come into contact. In this way, it is possible to form the neutral point bus bar 81 while positioning the connection portion 83 by providing the arc-shaped portion 84b in the non-deformation portion 84. Particularly, it is possible to securely deform only the deformation portion 85, which is easily plastically deformed, while positioning the connection portion 83. Thus, it is possible to effectively prevent the curvature radius of the neutral point bus bar 81 from being changed due to so-called springback after the bending.

### (Second Embodiment)

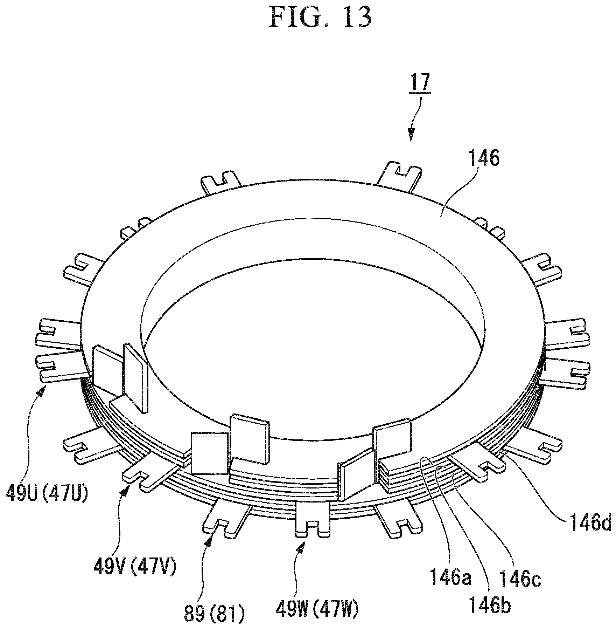

FIG. 13 is a perspective view showing a bus bar unit 17 according to a second embodiment.

In the bus bar unit 17 according to the first embodiment, the U-phase bus bar 47U, the V-phase bus bar 47V, the W-phase bus bar 47W, and the neutral point bus bar 81 are molded in the state where the bars are laminated at predetermined intervals in the axial direction, and are held by the resin-molded body 46 (refer to FIG. 3).

As shown in FIG. 13, the bus bar unit 17 according to the second embodiment is different from the first embodiment in that the bars are held by a cylindrical bus bar holder 146. In addition, descriptions below with respect to configurations similar to those of the first embodiment are omitted.

The bus bar unit 17 according to the second embodiment includes the cylindrical bus bar holder 146. For example, the bus bar holder 146 is formed of a resin material in advance, and approximately four annular groove portions 146a to 146d along the circumferential direction are formed on the outer circumferential surface of the bus bar holder so as to be aligned in parallel in the axial direction.

A width of each of the groove portions 146a to 146d is approximately the same as the thickness of each of the U-phase bus bar 47U, the V-phase bus bar 47V, the W-phase bus bar 47W, and the neutral point bus bar 81.

Each of the U-phase bus bar 47U, the V-phase bus bar 47V, the W-phase bus bar 47W, and the neutral point bus bar 81 is inserted and disposed into each of the groove portions 146a to 146d from the outside in the radial direction.

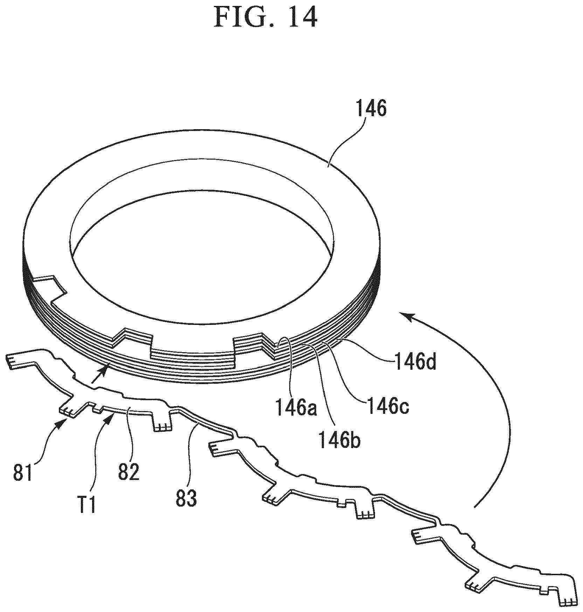

FIG. 14 is an explanatory view of a step for manufacturing the bus bar unit 17 according to the second embodiment. In addition, FIG. 14 shows a case where the neutral point bus bar 81 according to the first modification example of the first embodiment is assembled to the bus bar holder 146.

As shown in FIG. 14, the step for manufacturing the bus bar unit 17 includes a bending step. In the bending step, the plate-shaped member T1 is bent such that the width direction H of the plate-shaped member T1 and the radial direction of the bus bar holder 146 (that is, the radial direction in the bus bar unit) coincide with each other while the plate-shaped member T1 is inserted into the groove portion 146d for the neutral point bus bar 81. In this case, the bending is performed such that the plate-shaped member T1 is wound around the bus bar holder 146 in the groove portion 146. Accordingly, without using a specific jig, the bending of the plate-shaped member T1 is performed by using the bus bar holder 146 instead of the jig, and it is possible to assemble the neutral point bus bar 81 to the bus holder 146.

Similarly to the neutral point bus bar, it is possible to assemble the U-phase bus bar 47U, the V-phase bus bar 47V, and the W-phase bus bar 47W to the bus bar holder 146. That is, similarly to the neutral point bus bar, by bending three plate-shaped members T1 such that the width direction H of each plate-shaped member T1 and the radial direction (that is, radial direction of the bus bar unit) of the bus bar holder 146 coincide with each other while inserting three plate-shaped members T1 into the groove portions 146a to 146c, it is possible to assemble the U-phase bus bar 47U, the V-phase bus bar 47V, and the W-phase bus bar 47W to the bus bar holder 146.

According to the second embodiment, the groove portions 146a to 146d are formed on the outer circumferential surface of the bus bar holder 146 in advance, and the neutral point bus bar 81, the U-phase bus bar 47U, the V-phase bus bar 47V, and the W-phase bus bar 47W are formed by bending the plate-shaped member T1 while inserting the plate-shaped member T1 into the groove portions 146a to 146d. Accordingly, it is possible to hold each bus bar by methods other than resin molding while improving yield and decreasing the manufacturing cost.

In addition, the technical scope of the present invention is not limited to the above-described embodiments, and it is possible to add various modifications to the present invention.

In the above-described embodiments, for example, the case in which the brushless motor 1 is used in an electric power steering device is described. However, the application of the brushless motor 1 is not limited to the electric power steering device, and the brushless motor 1 can be applied to various electrical products.

In the above-described embodiments, as an example, the present invention is described with respect to the brushless motor 1 which includes the rotor 3 having the hollow rotary shaft member 22, into the inner portion of which the rack shaft (not shown) is inserted, and the bus bar unit 17 which is provided on the end portion opposite to the bracket 4 of the stator housing 11. However, the present invention may be applied to a small-sized brushless motor which includes a rotor configured of a solid rotary shaft member, and a bus bar unit provided between a stator housing and a bracket.

Moreover, in the above-described embodiments, the present invention is described with respect to the brushless motor 1 as an example. However, the application of the present invention is not limited to the brushless motor 1, and may be also applied to various electric motors having the bus bar unit 17.

The shapes of the U-phase bus bar 47U, the V-phase bus bar 47V, the W-phase bus bar 47W, and the neutral point bus bar 81 are not limited to the shapes described in the embodiments. For example, the number, the pitch angle, or the like of the phase terminals 49U, 49V, and 49W and the neutral point terminals 89 may be arbitrarily set according to the number of phases or the like of the brushless motor 1.

In the embodiments, the configuration, in which the neutral point bus bar 81 includes the bus bar pieces 82 and the connection portions 83, is described as an example.

Meanwhile, each of the U-phase bus bar 47U, the V-phase bus bar 47V, and the W-phase bus bar 47W may include the bus bar pieces 82 and the connection portions 83.

In the embodiments, the case is described as an example, in which the neutral point bus bar 81 includes three bus bar pieces 82 and the connection portions 83 which connect the adjacent bus bar pieces 82 to each other. The number of bus bar pieces 82 is not limited to three and may be two, or four or more.

Moreover, it is possible to appropriately replace the elements of the above-described embodiments with well-known elements within the scope which does not depart from the gist of the present invention.

### Industrial Applicability

According to the bus bar unit, since at least one of a phase bus bars and a neutral point bus bar is formed by bending an elongated plate-shaped member such that a width direction of the elongated plate-shaped member and a radial direction of the bus bar unit coincide with each other, for example, it is possible to form the bus bar by punching the elongated plate-shaped member from a metal plate or the like. Accordingly, unlike the related art, since it is not necessary to form the bus bar by punching an annular member or a C-shaped member from a metal plate, it is possible to improve yield and decrease the manufacturing cost. Moreover, since plural bus bar pieces and a connection portion which connects the bus bar pieces adjacent to each other are provided, and the width of at least a portion of the connection portion is narrower than the width of the bus bar piece, it is possible to form the bus bar by easily bending the elongated plate-shaped member.

In addition, since the phase bus bars and the neutral point bus bar are disposed so as to be laminated along the axial direction of the bus bar unit which coincides with a thickness direction of the plate-shaped member, compared to the bus bar unit of the related art in which the phase bus bar and the neutral point bus bar are disposed such that the width direction of the plate-shaped member and the axial direction of the bus bar unit coincide with each other, it is possible to decrease the size (decrease the thickness) of the bus bar unit in the axial direction. In addition, compared to the bus bar unit of the related art in which the plural phase bus bars and the neutral point bus bar are disposed so as to be laminated in the radial direction, it is possible to suppress an increase in size in the radial direction of the bus bar unit.

In this way, according to the bus bar unit described above, it is possible to decrease the size of the bus bar unit while decreasing the manufacturing cost.

### Reference Signs List

1: brushless motor
2: stator
3: rotor
14: teeth
16: coil
17: bus bar unit
45A: winding start end (one end)
45B: winding finish end (the other end)
47U: U-phase bus bar (phase bus bar)
47V: V-phase bus bar (phase bus bar)
47W: W-phase bus bar (phase bus bar)
49U: U-phase terminal (terminal)
49V: V-phase terminal (terminal)
49W: W-phase terminal (terminal)
81: neutral point bus bar
82: bus bar piece
82a: end surface
83: connection portion
84: non-deformation portion
84a: end surface
85: deformation portion
86: relief portion
89: neutral point terminal (terminal)
146: bus bar holder
146a, 146b, 146c, and 146d: groove portion
H: width direction
T: metal plate
T1: plate-shaped member

## Claims

1. A bus bar unit (17) which is configured to supply power to coils (16) of a plurality of phases and has a ring shape, comprising:
a plurality of phase bus bars (47U, 47V, 47W) which are provided for each phase and which include phase terminals (49U, 49V, 49W), each coil (16) having one end electrically connected to the corresponding phase terminal; and
a neutral point bus bar (81) which includes neutral point terminals (89), each coil (16) having its other end electrically connected to the neutral point terminals;
the bus bar unit (17) is to be placed at an axial end of a stator (2) of a motor and is to be coaxial with a center axis (O) of the motor,
the phase bus bars (47U, 47V, 47W) and the neutral point bus bar (81) are disposed so as to be laminated along an axial direction of the bus bar unit (17) in a state where a predetermined insulation distance is maintained from each other,
**characterised in that**:
at least one bus bar out of the phase bus bars (47U, 47V, 47W) and the neutral point bus bar (81) is formed by bending an elongated plate-shaped member (T1), which is punched from a metal plate (T), into a C-shaped bus bar such that a width direction of the elongated plate-shaped member (T1) and a radial direction of the bus bar unit (17) coincide with each other, and the thickness direction of the elongated plate-shaped member (T1) coincides with the axial direction of the bus bar unit (17), and wherein the elongated plate-shaped member (T1) includes a plurality of bus bar pieces (82) in which the terminals are formed and connection portions (83) which connect the bus bar pieces (82) adjacent to each other, and
a width of at least a portion of the connection portion (83) is narrower than a width of the bus bar piece (82).

2. The bus bar unit according to Claim 1,
wherein the neutral point bus bar (81) is formed by bending an elongated plate-shaped member (Tl), which is punched from a metal plate (T), into a C-shaped bus bar such that a width direction of the elongated plate-shaped member (Tl) and a radial direction of the bus bar unit (17) coincide with each other, and the thickness direction of the elongated plate-shaped member (Tl) coincides with the axial direction of the bus bar unit (17), and wherein the elongated plate-shaped member (Tl) includes a plurality of bus bar pieces (82) in which the terminals are formed and connection portions (83) which connect the bus bar pieces (82) adjacent to each other, anda width of at least a portion of the connection portion (83) is narrower than a width of the bus bar piece (82).

3. The bus bar unit according to Claim 1 or 2,
wherein the connection portion (83) includes,
a non-deformation portion (84) in which deformation is suppressed when the plate-shaped member (T1) is bent, and
a deformation portion (85) which is formed so as to have a narrower width than that of the non-deformation portion (84) and is positively deformable when the plate-shaped member (T1) is bent,
wherein a pair of the deformation portions (85) is disposed on both sides in a circumferential direction of the bus bar unit in a state where the non-deformation portion (84) is interposed therebetween, and connects the non-deformation portion (84) and the bus bar piece (82).

4. The bus bar unit according to Claim 3,
wherein the plate-shaped member (T1) is formed such that an end surface (82a) in the circumferential direction of the bus bar piece (82) and an end surface in the circumferential direction (84a) of the non-deformation portion (84) come into contact with each other when the plate-shaped member (T1) is bent, and
wherein a relief portion (86) recessed in the circumferential direction is formed in at least either one angle portion of an angle portion formed by the deformation portion (85) and the non-deformation portion (84), and an angle portion formed by the deformation portion (85) and the bus bar piece (82).

5. The bus bar unit according to any one of Claims 1 to 4,
wherein a resin material is provided to form a resin molded body (46) which enters between the bus bars.

6. The bus bar unit according to any one of Claims 1 to 4, further comprising:
a cylindrical bus bar holder (146) which holds the phase bus bars (47U, 47V, 47W) and the neutral point bus bar (81),
wherein a plurality of annular groove portions (146a to 146d) into which the plate-shaped members (T1) can be inserted are formed, aligned in in an axial direction, on the outer circumferential surface of the bus bar holder (146), and
wherein the phase bus bars (47U, 47V, 47W) and the neutral point bus bar (81) are formed by bending the plate-shaped member (T1) such that the width direction of the plate-shaped member (T1) and the radial direction of the bus bar unit (17) coincide with each other and that the axial direction of the bus bar unit (17) coincides with the thickness direction of the plate-shaped member while the plate-shaped member is inserted into the groove portion.

7. A method for manufacturing the bus bar unit (17) according to Claim 1, comprising:
a press step of punching the elongated plate-shaped member (T1) from a metal plate (T) material; and
a bending step of bending the plate-shaped member (T1) such that the width direction of the plate-shaped member (T1) and the radial direction of the bus bar unit (17) coincide with each other.

8. A brushless motor, comprising:
the bus bar unit (17) according to any one of Claims 1 to 6;
a stator (2) which includes a plurality of teeth (14) around which the coils (16) of the plurality of phases are wound;
a rotor (3) which is rotatably provided with respect to the stator (2); and
a motor case (11), in the inner portion of which the stator (2) is fixed,
wherein the coils (16) of the plurality of phases are electrically connected by the bus bar unit (17) disposed in the motor case (11).

## Patentansprüche

1. Eine Sammelschieneneinheit (17), dazu konfiguriert, Spulen (16) mit mehreren Phasen mit Strom zu versorgen, die ringförmig ist, und die enthält:
mehrere Phasensammelschienen (47U, 47V, 47W), die für jede Phase vorgesehen sind und die Phasenklemmen (49U, 49V, 49W) enthalten, jede Spule (16) ist an einem Ende elektrisch mit der entsprechenden Phasenklemme verbunden; und
eine Nullpunkt- Sammelschiene (81), die Nullleiterklemmen (89) enthält, jedes Spule (16) ist mit ihrem anderen Ende elektrisch mit den Nullleiterklemmen verbunden;
die Sammelschieneneinheit (17), wird an einem axialen Ende eines Stators (2) eines Motors positioniert und sollte koaxial zur Mittelachse (O) des Motors liegen, die Phasensammelschienen (47U, 47V, 47W) und die Nullpunkt- Sammelschiene (81) werden so angeordnet, dass sie entlang einer axialen Richtung der Sammelschieneneinheit (17) laminiert werden, in einer Art und Weise, dass zwischen ihnen ein vorher festgelegter Isolationsabstand beibehalten wird,
**dadurch gekennzeichnet, dass**
mindestens eine Sammelschiene der Phasensammelschienen (47U, 47V, 47W) und die Nullpunkt- Sammelschiene (81) geformt werden durch Biegen eines länglichen plattenförmigen Elements (T1), das aus einer Metallplatte (T) ausgestanzt wurde, in eine C-förmige Sammelschiene, so dass die Breitenrichtung des länglichen, plattenförmigen Elementes (T1) und die radiale Richtung der Sammelschieneneinheit (17) miteinander zusammenfallen und die Dickenrichtung des länglichen plattenförmigen Elements (T1) mit der axialen Richtung der Sammelschieneneinheit (17) zusammenfällt und,
dass das längliche plattenförmige Element (T1), mehrere Sammelschienenstücke (82) aufweist, in denen die Klemmen geformt sind sowie Verbindungsabschnitte (83), die die benachbarten Sammelschienenstücke (82) miteinander verbinden, und die Breite mindestens eines Verbindungsabschnitts (83) ist enger als die Breite des Sammelschienenteils (82).

2. Die Sammelschieneneinheit gemäß Anspruch 1, wobei die Nullpunkt-Sammelschiene (81) gebildet wird durch Biegen eines länglichen plattenförmigen Elements (T1), das ausgestanzt wird aus einer Metallplatte (T), in eine C-förmige Sammelschiene, so dass eine Breitenrichtung des länglichen, plattenförmigen Elementes (T1) und eine radiale Richtung der Sammelschieneneinheit (17) miteinander zusammenfallen und die Dickenrichtung des länglichen plattenförmigen Elements (T1) mit der axialen Richtung der Sammelschieneneinheit (17) zusammenfällt und dass das längliche plattenförmige Element (T1), mehrere Sammelschienenstücke (82) aufweist, in denen die Klemmen geformt sind sowie Verbindungsabschnitte (83), die die benachbarten Sammelschienenstücke (82) miteinander verbinden, und
die Breite mindestens eines Verbindungsabschnitts (83) ist enger als die Breite des Sammelschienenteils (82).

3. Die Sammelschieneneinheit gemäß Anspruch 1 oder 2, wobei der Verbindungsabschnitt (83) umfasst:
einen nicht- verformbaren Abschnitt (84), in dem die Verformung unterdrückt wird, wenn das plattenförmige Element (T1) gebogen wird, und
einen verformbaren Abschnitt (85), der so geformt ist, dass er eine geringere Breite aufweist als der nicht- verformbare Abschnitt (84) und positiv verformbar ist, wenn das plattenförmige Element (T1) gebogen wird,
wobei ein Paar der Verformungsabschnitte (85) an beiden Seiten in einer Umfangsrichtung der Sammelschieneneinheit angeordnet ist, in einer Art und Weise, dass der nicht- verformbare Abschnitt (84) dazwischen angeordnet ist und
der nicht- verformbare Abschnitt (84) und das Sammelschienenteil (82) miteinander verbunden werden.

4. Die Sammelschieneneinheit gemäß Anspruch 3,
wobei das plattenförmige Element (T1) so geformt ist, dass eine Abschlussfläche (82a) in der Umfangsrichtung des Sammelschienenteils (82) und eine Abschlussfläche in der Umfangsrichtung (84a) des nicht- verformbaren Abschnitts (84) miteinander in Kontakt kommen, wenn das plattenförmige Element (T1) gebogen wird, und
wobei ein Reliefabschnitt (86), ausgespart in der Umfangsrichtung gebildet wird in mindestens entweder einem der Winkelabschnitte eines Winkelabschnitts der gebildet wird durch den Verformungsabschnitt (85) und den nicht- verformbaren Abschnitt (84) und einem Winkelabschnitt, gebildet vom Verformungsabschnitt (85) und dem Sammelschienenteil (82).

5. Die Sammelschieneneinheit gemäß irgendeinem der Ansprüche 1 bis 4, wobei ein Harzmaterial bereitgestellt wird, zur Bildung eines aus Harz geformten Körpers (46), der zwischen die Sammelschienen eingesetzt werden kann.

6. Die Sammelschieneneinheit gemäß irgendeinem der Ansprüche 1 bis 4, weiterhin umfassend:
einen zylindrischen Sammelschienenträger (146), der die Phasensammelschienen (47U, 47V, 47W) und die Nullpunkt-Sammelschiene (81) hält,
wobei mehrere ringförmige Rillenabschnitte (146a bis 146d), in die die plattenförmigen Elemente (T1) eingeführt werden können, gebildet werden, ausgerichtet in einer axialen Richtung auf einer Außenumfangsfläche des Sammelschienenträgers (146), und
wobei die Phasensammelschienen (47U, 47V, 47W) und die Nullpunkt-Sammelschiene (81) geformt werden durch Biegen des plattenförmigen Elements (T1), so dass die Breiterichtung des plattenförmigen Elements (T1) und die radiale Richtung der Sammelschieneneinheit (17) miteinander zusammenfallen und dass die axiale Richtung der Sammelschieneneinheit (17) zusammenfällt mit der Dickenrichtung des plattenförmigen Elements, während das plattenförmige Element in den Rillenabschnitt eingesetzt wird.

7. Verfahren zur Herstellung der Sammelschieneneinheit (17) gemäß Anspruch umfassend:
einen Pressschritt zum Stanzen des plattenförmigen Elements (T1) aus einem Metallplattenmaterial (T); und,
einen Biegeschritt, indem das plattenförmige Element (T1) gebogen wird, so dass die Breitenrichtung des plattenförmigen Elements (T1) und die radiale Richtung der Sammelschieneneinheit (17) miteinander übereinstimmen.

8. Ein bürstenloser Motor, umfassend:
die Sammelschieneneinheit (17) gemäß irgendeinem der Ansprüche 1 bis 6,
einen Stator (2), der mehrere Zähne (14) umfasst, um die die Spulen (16) der mehreren Phasen gewunden sind;
einen Rotor (3), drehbar gegenüber dem Stator (2) vorgesehen und
ein Motorgehäuse (11) in dessen Innenabschnitt der Stator (2) befestigt ist,
wobei die Spulen (16) der mehreren Phasen elektrisch über die Sammelschieneneinheit (17) verbunden sind, die im Motorgehäuse (11) angeordnet ist.

## Revendications

1. Unité de barre-bus (17) qui est configurée pour délivrer de l'énergie à des bobines (16) d'une pluralité de phases et a une forme en anneau, comprenant :
une pluralité de barres-bus de phase (47U, 47V, 47W) qui sont prévues pour chaque phase et qui incluent des bornes de phase (49U, 49V, 49W), chaque bobine (16) ayant une extrémité connectée électriquement à la borne de phase correspondante ; et
une barre-bus de point neutre (81) qui inclut des bornes de point neutre (89),
chaque bobine (16) ayant son autre extrémité connectée électriquement aux bornes de point neutre ;
l'unité de barre-bus (17) doit être placée au niveau d'une extrémité axiale d'un stator (2) d'un moteur et doit être coaxiale avec un axe central (O) du moteur,
les barres-bus de phase (47U, 47V, 47W) et la barre-bus de point neutre (81) sont disposées de façon à être stratifiées le long d'une direction axiale de l'unité de barre-bus (17) dans un état où une distance d'isolement prédéterminée est maintenue entre les unes et les autres,
**caractérisée en ce que** :
au moins une barre-bus parmi les barres-bus de phase (47U, 47V, 47W) et la barre-bus de point neutre (81) est formée en pliant un élément en forme de plaque allongée (T1), qui est découpé à partir d'une plaque métallique (T), en une barre-bus en forme de C de manière à ce qu'une direction selon la largeur de l'élément en forme de plaque allongée (T1) et une direction radiale de l'unité de barre-bus (17) coïncident l'une avec l'autre, et la direction selon l'épaisseur de l'élément en forme de plaque allongée (T1) coïncide avec la direction axiale de l'unité de barre-bus (17),
et dans laquelle l'élément en forme de plaque allongée (T1) inclut une pluralité de pièces de barre-bus (82) dans lesquelles les bornes sont formées et des sections de connexion (83) qui connectent les pièces de barre-bus (82) adjacentes les unes aux autres, et
une largeur d'au moins une section de la section de connexion (83) est plus étroite qu'une largeur de la pièce de barre-bus (82).

2. Unité de barre-bus selon la revendication 1,
dans laquelle la barre-bus de point neutre (81) est formée en pliant un élément en forme de plaque allongée (T1), qui est découpé à partir d'une plaque métallique (T), en une barre-bus en forme de C de manière à ce qu'une direction selon la largeur de l'élément en forme de plaque allongée (T1) et une direction radiale de l'unité de barre-bus (17) coïncident l'une avec l'autre, et la direction selon l'épaisseur de l'élément en forme de plaque allongée (T1) coïncide avec la direction axiale de l'unité de barre-bus (17), et dans laquelle l'élément en forme de plaque allongée (T1) inclut une pluralité de pièces de barre-bus (82) dans lesquelles les bornes sont formées et des sections de connexion (83) qui connectent les pièces de barre-bus (82) adjacentes les unes aux autres, et une largeur d'au moins une section de la section de connexion (83) est plus étroite qu'une largeur de la pièce de barre-bus (82).

3. Unité de barre-bus selon la revendication 1 ou 2,
dans laquelle la section de connexion (83) inclut,
une section sans déformation (84) dans laquelle la déformation est supprimée lorsque l'élément en forme de plaque (T1) est plié, et
une section avec déformation (85) qui est formée de façon à avoir une largeur plus étroite que celle de la section sans déformation (84) et est positivement déformable lorsque l'élément en forme de plaque (T1) est plié,
dans laquelle une paire des sections avec déformation (85) est disposée sur les deux côtés dans une direction circonférentielle de l'unité de barre-bus dans un état où la section sans déformation (84) est interposée entre celles-là, et connecte la section sans déformation (84) et la pièce de barre-bus (82).

4. Unité de barre-bus selon la revendication 3,
dans laquelle l'élément en forme de plaque (T1) est formé de manière à ce qu'une surface d'extrémité (82a) dans la direction circonférentielle de la pièce de barre-bus (82) et une surface d'extrémité dans la direction circonférentielle (84a) de la section sans déformation (84) entrent en contact l'une avec l'autre lorsque l'élément en forme de plaque (T1) est plié, et
dans laquelle une section en relief (86) encastrée dans la direction circonférentielle est formée dans au moins l'une ou l'autre section angulaire d'une section angulaire formée par la section avec déformation (85) et la section sans déformation (84), et d'une section angulaire formée par la section avec déformation (85) et la pièce de barre-bus (82).

5. Unité de barre-bus selon l'une quelconque des revendications 1 à 4,
dans laquelle un matériau en résine est prévu pour former un corps moulé en résine (46) qui pénètre entre les barres-bus.

6. Unité de barre-bus selon l'une quelconque des revendications 1 à 4, comprenant en outre :
un porte-barre-bus cylindrique (146) qui supporte les barres-bus de phase (47U, 47V, 47W) et la barre-bus de point neutre (81),
dans laquelle une pluralité de sections de type rainure annulaire (146a à 146d) dans lesquelles les éléments en forme de plaque (T1) peuvent être insérés est formée, alignée dans une direction axiale, sur la surface circonférentielle externe du porte-barre-bus (146), et
dans laquelle les barres-bus de phase (47U, 47V, 47W) et la barre-bus de point neutre (81) sont formées en pliant l'élément en forme de plaque (T1) de manière à ce que la direction selon la largeur de l'élément en forme de plaque (T1) et la direction radiale de l'unité de barre-bus (17) coïncident l'une avec l'autre et à ce que la direction axiale de l'unité de barre-bus (17) coïncide avec la direction selon l'épaisseur de l'élément en forme de plaque tandis que l'élément en forme de plaque est inséré dans la section de type rainure.

7. Procédé de fabrication de l'unité de barre-bus (17) selon la revendication 1, comprenant :
une étape de formage à la presse consistant à poinçonner l'élément en forme de plaque allongée (T1) à partir d'un matériau de plaque métallique (T) ; et
une étape de pliage consistant à plier l'élément en forme de plaque (T1) de manière à ce que la direction selon la largeur de l'élément en forme de plaque (T1) et la direction radiale de l'unité de barre-bus (17) coïncident l'une avec l'autre.

8. Moteur sans balai, comprenant :
l'unité de barre-bus (17) selon l'une quelconque des revendications 1 à 6 ;
un stator (2) qui inclut une pluralité de dents (14) autour desquelles les bobines (16) de la pluralité de phases sont enroulées ;
un rotor (3) qui est prévu de manière à pouvoir subir une rotation par rapport au stator (2) ; et
un carter de moteur (11), dans la section interne duquel le stator (2) est fixé,
dans lequel les bobines (16) de la pluralité de phases sont électriquement connectées par l'unité de barre-bus (17) disposée dans le carter de moteur (11).
